# EUROPÄISCHE PATENTANMELDUNG

(11) **EP 4 729 249 A1**
(43) Veröffentlichungstag der Anmeldung: **22.04.2026**
(21) Anmeldenummer: 25209071.7
(22) Anmeldetag: 16.10.2025
(51) Int. Cl.: B25J 9/16, G05B 19/418, G06T 7/00

(54) **VERFAHREN UND VORRICHTUNG ZUM UMSETZEN WENIGSTENS EINES IN EINER BEARBEITUNGSEINRICHTUNG ZU BEARBEITENDEN OBJEKTS, VON EINER TRAGSTRUKTUR IN EINE BEARBEITUNGSEINRICHTUNG**

(30) Priorität: 18.10.2024 DE 102024130319
(71) Anmelder: Hans Weber Maschinenfabrik GmbH, 96317 Kronach (DE)
(72) Erfinder: Schlee, Marco, 96317 Kronach (DE); Hoderlein, Thomas, 96317 Kronach (DE); Lindner, Dominik, 96317 Kronach (DE)
(74) Vertreter: Hafner & Kohl PartmbB

(57) **Zusammenfassung**

Verfahren und Vorrichtung zum Umsetzen wenigstens eines in einer Bearbeitungseinrichtung zu bearbeitenden Objekts, von einer Tragstruktur in eine Bearbeitungseinrichtung.

## Beschreibung

Die Erfindung betrifft ein Verfahren und eine Vorrichtung zum Umsetzen wenigstens eines in einer Bearbeitungseinrichtung zu bearbeitenden Objekts, von einer Tragstruktur in eine Bearbeitungseinrichtung.

Entsprechende Verfahren und Vorrichtungen zum Umsetzen wenigstens eines in einer Bearbeitungseinrichtung, d. h. z. B. in einer Entgrat- oder Schleifeinrichtung, zu bearbeitenden Objekts, wie z. B. eines Werkstücks, von einer Tragstruktur in eine bzw. in die entsprechende Bearbeitungseinrichtung sind aus dem Stand der Technik dem Grunde nach bekannt.

Im Rahmen entsprechender Verfahren werden auf einer Tragstruktur angeordnete unbearbeitete und damit zu in einer Bearbeitungseinrichtung bearbeitende Objekte sonach vermittels einer geeigneten Handhabungseinrichtung, wie z. B. einer Robotereinrichtung, von der Tragstruktur in die Bearbeitungseinrichtung umgesetzt, um dort, z. B. zum Entgraten oder Schleifen, bearbeitet zu werden.

Wenngleich es grundsätzlich bekannt ist, entsprechende Umsetzvorgänge vermittels derartigen Handhabungseinrichtungen und diesen zugeordneten, typischerweise optischen Erfassungseinrichtungen automatisiert ablaufen zu lassen, ist es bis dato, insbesondere auf einfache und praktische Weise, nicht möglich, die umzusetzenden Objekte vor dem Umsetzvorgang insoweit zu erkennen, dass diese einem bestimmten Auftrag, Kunden, etc. zugeordnet werden können. Mithin können umzusetzende Objekte im Rahmen entsprechender Verfahren bis dato zwar erfasst werden, um einen optimalen Angriffspunkt einer Handhabungseinrichtung an einem umzusetzenden Objekt zu ermitteln; um welches umzusetzende Objekt es sich allerdings konkret handelt, d. h. welchem Auftrag, Kunden, etc., das jeweilige Objekte zugehörig ist, kann nicht ermittelt werden.

Hiervon ausgehend liegt der vorliegenden Erfindung die Aufgabe zugrunde, ein demgegenüber verbessertes Verfahren und eine verbesserte Vorrichtung zum Umsetzen wenigstens eines in einer Bearbeitungseinrichtung zu bearbeitenden Objekts von einer Tragstruktur in eine Bearbeitungseinrichtung anzugeben.

Die Aufgabe wird durch die Gegenstände der unabhängigen Ansprüche gelöst. Die hierzu abhängigen Ansprüche betreffen mögliche Ausführungsformen des Verfahrens bzw. der Vorrichtung.

Ein erster Aspekt der Erfindung betrifft ein Verfahren zum Umsetzen wenigstens eines in einer Bearbeitungseinrichtung zu bearbeitenden Objekts von einer Tragstruktur in eine Bearbeitungseinrichtung. Das Verfahren dient sonach grundsätzlich zum Umsetzen wenigstens eines in einer Bearbeitungseinrichtung zu bearbeitenden Objekts von einer Tragstruktur in eine Bearbeitungseinrichtung, in welcher eine Bearbeitung des wenigstens einen in diese umgesetzten Objekts erfolgen soll bzw. erfolgt.

Bei einem verfahrensgemäß umzusetzenden bzw. umgesetzten Objekt kann es sich im Allgemeinen um jedwedes Objekt handeln, welches in einer im Weiteren näher erläuterten Bearbeitungseinrichtung wenigstens einem Bearbeitungsschritt zu unterziehen ist. Im Besonderen kann es sich bei einem verfahrensgemäß umzusetzenden bzw. umgesetzten Objekt um ein technisches Bauteil, wie z. B. um ein Werkstück, z. B. aus Metall, Kunststoff oder Holz, handeln, welches in einer im Weiteren näher erläuterten Bearbeitungseinrichtung wenigstens einem Bearbeitungsschritt zu unterziehen ist.

Bei einer Tragstruktur kann es sich im Allgemeinen um jedwede tragende Struktur handeln, auf welcher ein oder mehrere in eine Bearbeitungseinrichtung umzusetzende Objekte ableg- oder aufnehmbar sind. Die Tragstruktur kann statisch ausgeführt sein, mithin keine Förderfunktion von auf ihr angeordneten bzw. abgelegten Objekten entlang einer Förderstrecke aufweisen, oder dynamisch ausgeführt sein, mithin eine Förderfunktion von auf ihr angeordneten bzw. abgelegten Objekten entlang einer Förderstrecke aufweisen. Konkrete, jedoch nicht einschränkende Beispiele für eine Tragstruktur sind daher Paletten (Beispiel für eine statische Tragstruktur) oder Fördereinrichtungen (Beispiel for eine dynamische Tragstruktur), d. h. insbesondere Förderbänder, Förderketten, etc. Die Tragstruktur kann in allen Ausführungsformen wenigstens eine Ablege- und/oder Aufnahmefläche aufweisen, auf welcher ein oder mehrere in eine Bearbeitungseinrichtung umzusetzende Objekte ableg- oder aufnehmbar sind. Die Tragstruktur kann in einem Nicht-Arbeitsbereich einer übergeordneten Vorrichtung, d. h. z. B. einer Umsetz- und Bearbeitungsanlage, angeordnet sein.

Bei einer Bearbeitungseinrichtung kann es sich im Allgemeinen um jedwede Bearbeitungseinrichtung handeln, die eingerichtet ist, wenigstens ein in diese umgesetztes

Objekt wenigstens einem Bearbeitungsschritt zu unterziehen. Im Besonderen kann es sich bei einer Bearbeitungseinrichtung um eine mechanische Bearbeitungseinrichtung handeln, die eingerichtet ist, wenigstens ein in diese umgesetztes Objekt wenigstens einem mechanischen Bearbeitungsschritt zu unterziehen. Bei einem entsprechenden mechanischen Bearbeitungsschritt kann es sich z. B. um einen materialabtragenden Bearbeitungsschritt handeln. Ein entsprechender materialabtragender Bearbeitungsschritt kann z. B. ein Entgratschritt zum Entgraten eines Objekts und/oder um ein Schleifschritt zum Schleifen eines Objekts sein. Die Bearbeitungseinrichtung kann daher konkret z. B. als Entgrat- und/oder Schleifeinrichtung, insbesondere als Metall- oder Holzschleifeinrichtung, ausgebildet sein oder eine solche umfassen. Die Bearbeitungseinrichtung kann in allen Ausführungsformen wenigstens eine Ablege- und/oder Aufnahmefläche aufweisen, auf welcher in dieser zu bearbeitende bzw. in dieser bearbeitete Objekte ableg- oder aufnehmbar sind. Die Bearbeitungseinrichtung kann in einem zu dem Nicht-Arbeitsbereich, in welchem die Tragstruktur angeordnet ist, benachbarten Arbeitsbereich einer übergeordneten Vorrichtung, wie z. B. Umsetz- und Bearbeitungsanlage, angeordnet sein.

Wie sich im Weiteren ergibt, wird verfahrensgemäß zum Umsetzen wenigstens eines Objekts von der Tragstruktur in die Bearbeitungseinrichtung eine Umsetzeinrichtung verwendet, welche eingerichtet ist, ein oder mehrere Objekte, insbesondere (voll)automatisierbar bzw. (voll)automatisch, von der Tragstruktur in die Bearbeitungseinrichtung umzusetzen. Das Umsetzen wenigstens eines Objekts beinhaltet typischerweise zumindest ein Aufnehmen des wenigstens einen Objekts vermittels wenigstens eines Umsetzelements der Umsetzeinrichtung, z. B. durch ein zumindest abschnittsweise Greifen des wenigstens einen Objekts, ein Bewegen des vermittels des Umsetzelements aufgenommenen wenigstens einen Objekts von der Tragstruktur in die Bearbeitungseinrichtung und ein Ablegen des wenigstens einen Objekts auf einer Ablege- und/oder Aufnahmefläche der Bearbeitungseinrichtung.

Verfahrensgemäß kann eine Umsetzeinrichtung verwendet werden, welche eingerichtet ist, ein oder mehrere an einem umzusetzenden Objekte Greifpunkte automatisch zu ermitteln. Insbesondere kann die Umsetzeinrichtung eingerichtet sein, ein Verfahren zu implementieren, wie es in dem Dokument DE102019118917A1 beschrieben ist; auf die Offenbarung des Dokuments DE102019118917A1 wird insoweit Bezug genommen und die Offenbarung des Dokuments insoweit mit in die Offenbarung des vorliegenden Dokuments einbezogen.

Verfahrensgemäß kann eine Umsetzeinrichtung verwendet werden, welche als eine, insbesondere boden- oder deckenseitig montierbare oder montierte, Handhabungseinrichtung ausgebildet ist oder wenigstens eine solche umfasst. Eine entsprechende Handhabungseinrichtung kann wiederum als mehrachsiger, d. h. insbesondere vier- oder sechsachsiger, Roboter bzw. Industrieroboter ausgebildet sein oder wenigstens einen solchen umfassen. Bei der bzw. einer verfahrensgemäß verwendeten Umsetzeinrichtung kann es sich sonach um eine, insbesondere (voll)automatisierbar bzw. (voll)automatisiert, betreibbare Handhabungseinrichtung handeln, welche zur Handhabung von Werkstücken im Rahmen entsprechender Umsetzvorgänge, d. h. insbesondere entsprechender Beladevorgänge in eine Bearbeitungseinrichtung und/oder Entladevorgänge aus einer Bearbeitungseinrichtung, eingerichtet ist. Eine entsprechende Umsetz- bzw. Handhabungseinrichtung umfasst sonach typischerweise wenigstens ein, gegebenenfalls auch als Endeffektor bezeichenbares, Umsetz- bzw. Handhabungselement, welches z. B. als Greifer- oder Saugerelement ausgebildet bzw. wenigstens ein solches umfassen kann.

Das Verfahren kann sonach im Allgemeinen insbesondere zum Beladen einer Bearbeitungseinrichtung mit entsprechenden in der Bearbeitungseinrichtung zu bearbeitenden Objekten vorgesehen sein. Grundsätzlich ist verfahrensgemäß auch ein Entladen einer Bearbeitungseinrichtung mit entsprechenden in dieser bearbeiteten Objekten möglich; die nachfolgenden Schritte des Verfahrens zum Umsetzen wenigstens eines Objekts in eine Bearbeitungseinrichtung (Beladen) gelten in entsprechender Weise für ein Entladen.

Das Verfahren umfasst die im Folgenden näher beschriebenen Schritte:
In einem ersten Schritt des Verfahrens erfolgt ein Erfassen wenigstens eines auf der Tragstruktur befindlichen Objekts vermittels wenigstens einer Erfassungseinrichtung. Bei der wenigstens einen Erfassungseinrichtung kann es sich um eine optische Erfassungseinrichtung handeln. Eine entsprechende optische Erfassungseinrichtung kann z. B. als Kameraeinrichtung, insbesondere als 3D-Kameraeinrichtung, oder als Scannereinrichtung, insbesondere als 3D-Scannereirnichtung, d. h. im Allgemeinen als optische Sensoreinrichtung, ausgebildet sein oder wenigstens eine solche umfassen. Die Erfassungseinrichtung kann sonach insbesondere eingerichtet sein, eine mehrdimensionale, d. h. insbesondere eine dreidimensionale, Abbildung des wenigstens einen erfassten Objekts zu erzeugen. Aus den von der Erfassungseinrichtung gelieferten Informationen - hierbei handelt es sich typischerweise um Bildinformationen - kann, z. B. vermittels computerimplementierten Bildverarbeitungstechniken, d. h. insbesondere vermittels einem oder mehreren Bildverarbeitungsalgorithmen, eine mehrdimensionale, d. h. insbesondere eine dreidimensionale, Bildinformation des wenigstens einen erfassten Objekts erzeugt werden.

Es ist denkbar in dem ersten Schritt des Verfahrens mehrere Erfassungseinrichtungen gleicher oder unterschiedlicher Art einzusetzen bzw. zu verwenden, um das wenigstens eine auf der Tragstruktur befindliche Objekt zu erfassen. Sofern mehrere Erfassungseinrichtungen eingesetzt bzw. verwendet werden, um das wenigstens eine auf der Tragstruktur befindliche Objekt zu erfassen, können diese in unterschiedlichen Anordnungen und/oder Ausrichtungen relativ zu der Tragstruktur und damit relativ zu dem wenigstens einen Objekt angeordnet und/oder ausgerichtet sein bzw. werden. Aus den von den Erfassungseinrichtungen jeweilig gelieferten Informationen - hierbei handelt es sich typischerweise um Bildinformationen - kann eine mehrdimensionale, d. h. insbesondere eine dreidimensionale, Abbildung des wenigstens einen erfassten Objekts erzeugt werden. Dies kann z. B. erfolgen, indem die von den jeweiligen Erfassungseinrichtungen gelieferten Informationen z. B. vermittels computerimplementierten Bildverarbeitungstechniken, d. h. insbesondere vermittels einem oder mehreren Bildverarbeitungsalgorithmen, zu einer mehrdimensionalen, d. h. insbesondere dreidimensionalen, Bildinformation des wenigstens einen erfassten Objekts zusammengesetzt werden.

Die Bildinformation des wenigstens einen erfassten Objekts kann in allen Ausführungsformen gegebenenfalls vermittels computerimplementierten Transformationstechniken, d. h. insbesondere vermittels einem oder mehreren Transformationsalgorithmen, in ein Format bzw. Datenformat transformiert werden, in welchem diese, wie im Weiteren erläutert wird, mit in einer Datenspeichereinrichtung hinterlegten Abgleichsinformationen, insbesondere mit in diesen enthaltenen Geometrieinformationen, abgeglichen werden kann.

In einem direkt oder indirekt auf den ersten Schritt folgenden zweiten Schritt des Verfahrens erfolgt ein Erzeugen einer das wenigstens eine erfasste Objekt geometrisch beschreibenden Erfassungsinformation. Die von der oder den Erfassungseinrichtung(en) gelieferten Informationen können in dem zweiten Schritt des Verfahrens sonach z. B. vermittels computerimplementierten Bildverarbeitungstechniken, d. h. insbesondere vermittels einem oder mehreren Bildverarbeitungsalgorithmen, so aufbereitet bzw. verarbeitetet, dass wenigstens eine das wenigstens eine erfasste Objekt geometrisch beschreibende Erfassungsinformation erzeugt wird. Die Erfassungsinformation kann ein oder mehrere geometrische Merkmale bzw. Parameter des wenigstens einen erfassten Objekts beschreiben; ein entsprechendes geometrisches Merkmal bzw. ein entsprechende geometrischer Parameter des wenigstens einen erfassten Objekts kann insbesondere wenigstens eine(r) der folgenden Merkmale bzw. Parameter des wenigstens einen erfassten Objekts sein oder beschreiben: Länge, Breite, Höhe, Außenkontur, Innenkontur, Form, Fläche.

Auch die Erfassungsinformation des wenigstens einen erfassten Objekts kann in allen Ausführungsformen gegebenenfalls vermittels computerimplementierten Transformationstechniken, d. h. insbesondere vermittels einem oder mehreren Transformationsalgorithmen, in ein Format bzw. Datenformat transformiert werden, in welchem diese, wie im Weiteren erläutert wird, mit in einer Datenspeichereinrichtung hinterlegten Abgleichsinformationen, insbesondere mit in diesen enthaltenen Geometrieinformationen, abgeglichen werden kann.

In einem direkt oder indirekt auf den zweiten Schritt folgenden dritten Schritt des Verfahrens erfolgt ein Abgleichen der Erfassungsinformation mit in einer Datenspeichereinrichtung hinterlegten Abgleichsinformationen zu im Rahmen eines Umsetzvorgangs vermittels einer bzw. der jeweiligen Umsetzeinrichtung umzusetzenden Objekten. Jede Abgleichsinformation enthält eine ein umzusetzendes Objekt geometrisch beschreibende Geometrieinformation und wenigstens eine das jeweilige Objekt betreffende Zusatzinformation. Die in der Datenspeichereinrichtung hinterlegten Abgleichsinformationen können mehrere, gegebenenfalls alle, im Rahmen eines oder mehrerer Umsetzvorgänge umzusetzende Objekte beinhalten, wobei jedes dieser Objekte in der jeweiligen Abgleichsinformation durch die jeweilige Zusatzinformation konkret definiert ist, insbesondere indem die Zusatzinformation dem jeweiligen Objekt wenigstens eine der folgenden Informationen fest zuweist: eine Art des Objekts, eine Artikelnummer des Objekts, eine die Bearbeitung des Objekts betreffende Auftragsnummer, eine die Bearbeitung des Objekts betreffende Kundennummer, einen oder mehrere die Bearbeitung des Objekts betreffende Bearbeitungsparameter, einen Ablageort des umzusetzenden Objekts, eine Ablageausrichtung des umzusetzenden Objekts.

Die wenigstens eine Zusatzinformation dient, wie sich im Weiteren ergibt, sonach insbesondere dazu, dem wenigstens eine erfassten Objekt bei einem erfolgten Abgleich mit einer Abgleichsinformation eine Art des Objekts, eine Artikelnummer des Objekts, eine die Bearbeitung des Objekts betreffende Auftragsnummer, eine die Bearbeitung des Objekts betreffende Kundennummer, einen oder mehrere die Bearbeitung des Objekts betreffende Bearbeitungsparameter, einen Ablageort des umzusetzenden Objekts, eine Ablageausrichtung des umzusetzenden Objekts, etc., konkret zuzuordnen.

Der Abgleichvorgang erfolgt daher mit der Zielsetzung, das wenigstens eine in dem ersten Schritt erfasste Objekt mit Abgleichsinformationen abzugleichen und damit einem konkreten Objekt zuzuordnen, um zu ermitteln bzw. um ermitteln zu können, um welches bzw. um was für ein Objekt es sich bei dem wenigstens einen erfassten Objekt tatsächlich konkret handelt. Aus diesem Grund enthält jede Abgleichsinformation nicht nur eine ein umzusetzendes Objekt geometrisch beschreibende Geometrieinformation, welche für den Abgleich mit dem Erfassungsinformation verwendet werden kann, sondern zusätzlich eine im Weiteren näher erläuterte das jeweilige Objekt betreffende Zusatzinformation. Das Verfahren kann sonach im Rahmen des dritten Schritts ein Zuordnen der Erfassungsinformation zu einer Geometrieinformation, welche ein zu dem wenigstens einen umzusetzenden Objekt geometrisch korrespondierendes Objekt beschreibt, beinhalten, um zu ermitteln, um welches bzw. um was für ein Objekt es sich bei dem wenigstens einen erfassten Objekt tatsächlich konkret handelt.

Die Erfassungsinformation kann in dem dritten Schritt des Verfahrens sonach z. B. vermittels computerimplementierten Abgleichtechniken, d. h. insbesondere vermittels einem oder mehreren Abgleichalgorithmen, mit in einer Datenspeichereinrichtung hinterlegten Abgleichsinformationen zu im Rahmen eines Umsetzvorgangs vermittels einer Umsetzeinrichtung umzusetzenden Objekten abgeglichen werden.

In einem direkt oder indirekt auf den dritten Schritt folgenden vierten Schritt des Verfahrens erfolgt schließlich ein Durchführen eines Umsetzvorgangs des wenigstens einen erfassten Objekts vermittels einer bzw. der Umsetzeinrichtung in die Bearbeitungseinrichtung. Der Umsetzvorgang erfolgt sonach verfahrensgemäß dann, wenn auf Grundlage des Abgleichvorgangs ermittelt wurde, um welches bzw. um was für ein Objekt es sich bei dem wenigstens einen erfassten Objekt tatsächlich konkret handelt, was anhand des zuvor erfolgten Abgleichens der Erfassungsinformation mit in der Datenspeichereinrichtung hinterlegten Abgleichsinformationen zu im Rahmen eines Umsetzvorgangs vermittels einer Umsetzeinrichtung umzusetzenden Objekten möglich ist.

Insgesamt liegt damit ein verbessertes, weil intelligente(re)s Verfahren zum Umsetzen wenigstens eines in einer Bearbeitungseinrichtung zu bearbeitenden Objekts von einer Tragstruktur in eine Bearbeitungseinrichtung vor, welches es auf einfache und praktische Weise ermöglicht, die umzusetzenden Objekte über einen entsprechenden Abgleich zu erkennen, sodass diese z. B. einem bestimmten Auftrag, Kunden, etc. zugeordnet werden können, was für die Gesamtabarbeitung einer entsprechenden Umsetzaufgabe, in welcher zahlreiche verschiedene Objekte, d. h. insbesondere auch Objekte, die unterschiedlichen Aufträgen, Kunden, etc. zugehörig sind, in eine Bearbeitungseinrichtung umzusetzen sind, erhebliche Vorteile mit sich bringen kann, da verfahrensgemäß zu jedem umzusetzenden Objekt ermittelt werden kann bzw. ermittelt wird, um welches bzw. um was für ein Objekt es sich tatsächlich konkret handelt, was eine intelligente(re) Beladung der Bearbeitungseinrichtung erlaubt.

Das Verfahren kann insofern auch als Verfahren und Vorrichtung zum intelligenten Umsetzen wenigstens eines in einer Bearbeitungseinrichtung zu bearbeitenden Objekts auf Basis durch einen Abgleich ermittelten Werkstückdaten, von einer Tragstruktur in eine Bearbeitungseinrichtung bezeichnet werden.

In einer Ausführungsform des Verfahrens kann vor dem Schritt des Durchführens des Umsetzvorgangs des wenigstens einen erfassten Objekts vermittels der Umsetzeinrichtung ein Schritt des Erstellens einer eine Priorisierung des wenigstens einen erfassten Objekts im Rahmen eines Umsetzvorgangs vermittels der Umsetzeinrichtung beschreibenden Priorisierungsinformation basierend auf dem Ergebnis des Abgleichens erfolgen. Eine entsprechende Priorisierungsinformation kann z. B. einen Zeitpunkt, d. h. insbesondere einen Startzeitpunkt, der Umsetzung des erfassten Objekts im Rahmen eines Umsetzvorgangs mehrerer umzusetzender Objekte beschreiben. Das wenigstens eine erfasste Objekt kann daher basierend auf dem Ergebnis des Abgleichens und damit basierend auf der Ermittlung, um welches bzw. um was für ein Objekt es sich bei dem wenigstens einen erfassten Objekt tatsächlich konkret handelt, und damit, welchem Auftrag, Kunden, etc. das wenigstens eine erfasste Objekt tatsächlich konkret zugehörig ist, mit einer Priorisierungsinformation versehen werden, welche Priorisierungsinformation bzw. welche damit verbundene Priorität bei dem im Weiteren erfolgenden Umsetzvorgang des wenigstens einen erfassten Objekts berücksichtigt werden kann. Die Umsetzeinrichtung bzw. deren Betrieb kann sonach auf Grundlage der Priorisierungsinformation gesteuert werden.

In einer weiteren Ausführungsform des Verfahrens kann die das wenigstens eine erfasste Objekt geometrisch beschreibende Erfassungsinformation eine punkt- oder linienförmige Abbildung des wenigstens einen erfassten Objekts bzw. wenigstens eines Abschnitts des wenigstens einen erfassten Objekts beschreiben bzw. aus der das wenigstens eine erfasste Objekt geometrisch beschreibenden Erfassungsinformation eine punkt- oder linienförmige Abbildung bzw. Bildinformation, insbesondere eine Punktewolke, des wenigstens einen erfassten Objekts erzeugt werden kann. Derart können sich Vorteile für den Abgleich der Erfassungsinformation mit entsprechenden Abgleichsinformationen, d. h. insbesondere entsprechenden Geometrieinformationen, ergeben, denn auch diese können eine punkt- oder linienförmige Abbildung bzw. Bildinformation des jeweiligen Objekts bzw. eines Abschnitts des jeweiligen Objekts beschreiben. Die Erfassungsinformation kann sonach im Allgemein z. B. computerimplementiert, d. h. insbesondere über ein oder mehrere Bildverarbeitungsalgorithmen, so aufbereitet bzw. verarbeitet werden, dass sie in einer Form bzw. einem Format bzw. Datenformat vorliegt, welche ein einfaches Abgleichen mit einer entsprechenden Abgleichsinformation bzw. Geometrieinformation ermöglicht. Derart kann in überraschender Weise erheblich Rechen- und/oder Speicherkapazität gespart und das Verfahren insgesamt, insbesondere im Hinblick auf die erforderlichen Rechen- und/oder Speicherressourcen, effizienter gestaltet werden.

Das Aufbereiten bzw. Verarbeiten der jeweiligen Erfassungsinformation kann in allen Ausführungsformen ein Transformieren einer dreidimensionalen Bildinformation des wenigstens einen erfassten Objekts in eine zweidimensionale Bildinformation des wenigstens einen erfassten Objekts beinhalten, insbesondere wenn auch die Geometrieinformation das jeweilige Objekt als zweidimensionale Bildinformation beschreibt, oder umgekehrt.

In einer weiteren Ausführungsform des Verfahrens kann die in einer jeweiligen Abgleichsinformation enthaltene Geometrieinformation durch Datenverarbeitung, insbesondere Datentransformation, aus einer CAD- oder DXF-Datei erzeugt werden. Bei den Geometrieinformationen kann es sich sonach jeweils um eine durch Datenverarbeitung, insbesondere Datentransformation, aus einer CAD- oder DXF-Datei erzeugte bzw. abgeleitete Information handeln. Insbesondere kann es sich bei den Geometrieinformationen sonach jeweils um eine durch Datenverarbeitung, insbesondere Datentransformation, aus einer CAD- oder DXF-Datei erzeugte bzw. abgeleitete Bildinformation in Form einer punkt- oder linienförmigen Abbildung bzw. Bildinformation, insbesondere einer Punktewolke, des jeweiligen Objekts handeln. Eine entsprechende einer punkt- oder linienförmigen Abbildung bzw. Bildinformation des jeweiligen Objekts kann das jeweilige Objekt insbesondere im Bereich seiner Außenkontur und/oder Oberseite beschreiben.

In einer weiteren Ausführungsform des Verfahrens kann das Abgleichen einen Abgleich eines oder mehrerer der in der Erfassungsinformation beschriebenen oder aus dieser ableitbaren geometrischen Merkmale bzw. Parameter des wenigstens einen erfassten Objekts mit einem oder mehreren hierzu korrespondierenden in der bzw. einer jeweiligen Geometrieinformation beschriebenen oder aus dieser ableitbaren geometrischen Merkmalen bzw. Parameter beinhalten. Das Abgleichen bzw. ein entsprechender Abgleichvorgang kann sonach eine Ermittlung von Ähnlichkeiten bzw. Übereinstimmungen zwischen einem oder mehreren in einer entsprechenden Erfassungsinformation beschriebenen geometrischen Merkmalen bzw. Parametern des wenigstens einen erfassten Objekts mit in einer entsprechenden Abgleichsinformation bzw. Geometrieinformation beschriebenen geometrischen Merkmalen bzw. Parametern eines jeweiligen Objekts beinhalten. Dabei kann es vorgesehen sein, dass eine Übereinstimmung zwischen einem erfassten Objekt und einem entsprechenden Objekt gegeben ist, wenn ein oder mehrere bestimmte geometrische Merkmale bzw. Parameter zumindest zu einem bestimmten Grad übereinstimmen. Dabei können Grenzwerte implementiert werden, welche z. B. definieren, dass eine Übereinstimmung zwischen einem erfassten Objekt und einem entsprechenden Objekt gegeben ist, wenn mehr als 50%, insbesondere mehr als 60%, weiter insbesondere mehr als 70%, weiter insbesondere mehr als 80%, weiter insbesondere mehr als 90%, eines oder mehrerer geometrischer Merkmale bzw. Parameter des wenigstens einen erfassten Objekts mit dem entsprechenden Objekt vorliegt.

In einer weiteren Ausführungsform des Verfahrens kann die Zusatzinformation, wie weiter oben bereits angedeutet, wenigstens eine der folgenden Informationen des jeweiligen Objekts umfassten eine Art, eine Artikelnummer, eine, insbesondere die Bearbeitung des Objekts betreffende, Auftragsnummer, eine, insbesondere die Bearbeitung des Objekts betreffende, Kundennummer, einen oder mehrere die Bearbeitung des Objekts betreffende Bearbeitungsparameter, einen Ablageort des umzusetzenden Objekts, insbesondere auf der Ablege- und/oder Aufnahmefläche der Tragstruktur und/oder der Ablege- und/oder Aufnahmefläche der Bearbeitungseinrichtung, eine Ablageausrichtung des umzusetzenden Objekts, insbesondere auf der Ablege- und/oder Aufnahmefläche der Tragstruktur und/oder der Ablege- und/oder Aufnahmefläche der Bearbeitungseinrichtung. Mithin ist es durch das beschriebene Abgleichen der Erfassungsinformation mit in einer Datenspeichereinrichtung hinterlegten Abgleichsinformationen zu im Rahmen eines Umsetzvorgangs vermittels einer Umsetzeinrichtung umzusetzenden Objekten, wobei jede Abgleichsinformation eine ein umzusetzendes Objekt geometrisch beschreibende Geometrieinformation und eine das jeweilige Objekt betreffende Zusatzinformation enthält, und das daraufhin mögliche Zuordnen des wenigstens einen erfassten Objekts zu einem konkreten im Rahmen eines Umsetzvorgangs umzusetzenden Objekt möglich, dem wenigstens einen erfassten Objekt bereits vor dem eigentlichen Umsetzvorgang eine Art, eine Artikelnummer, eine, insbesondere die Bearbeitung des Objekts betreffende, Auftragsnummer, eine, insbesondere die Bearbeitung des Objekts betreffende, Kundennummer, einen oder mehrere die Bearbeitung des Objekts betreffende Bearbeitungsparameter, einen Ablageort des umzusetzenden Objekts, insbesondere auf der Ablege- und/oder Aufnahmefläche der Tragstruktur und/oder der Ablege- und/oder Aufnahmefläche der Bearbeitungseinrichtung, eine Ablageausrichtung des umzusetzenden Objekts, insbesondere auf der Ablege- und/oder Aufnahmefläche der Tragstruktur und/oder der Ablege- und/oder Aufnahmefläche der Bearbeitungseinrichtung zuzuordnen.

Sämtliche der vorstehend erwähnten, verfahrensgemäß einsetzbaren bzw. verwendbaren Algorithmen können in einer oder mehreren hardware- und/oder softwaremäßig implementierten Steuereinrichtungen implementiert sein, welche zur Durchführung des Verfahrens eingerichtet ist bzw. sind.

Ein zweiter Aspekt der Erfindung betrifft eine Vorrichtung zum Umsetzen wenigstens eines in einer Bearbeitungseinrichtung zu bearbeitenden Objekts, insbesondere eines Werkstücks, von einer Tragstruktur in eine Bearbeitungseinrichtung. Die Vorrichtung kann zur Durchführung des Verfahrens gemäß dem ersten Aspekt der Erfindung eingerichtet sein. Insbesondere kann die Vorrichtung eine Steuereinrichtung umfassen, welche eingerichtet ist, Steuerinformationen zu erzeugen, um einzelne, mehrere oder alle nachfolgend erläuterten Bestandteile bzw. Komponenten der Vorrichtung zur Durchführung des Verfahrens anzusteuern. Sämtliche Ausführungen im Zusammenhang mit dem Verfahren gemäß dem ersten Aspekt Erfindung gelten grundsätzlich analog für die Vorrichtung gemäß dem zweiten Aspekt der Erfindung und umgekehrt.

Die Vorrichtung kann insbesondere die folgenden Bestandteile bzw. Komponenten umfassen: eine Tragstruktur, eine Umsetzeinrichtung, eine Erfassungseinrichtung zum Erfassen wenigstens eines auf der Tragstruktur befindlichen Objekts, eine Datenspeichereinrichtung, in welcher Abgleichsinformationen zu im Rahmen eines Umsetzvorgangs vermittels der Umsetzeinrichtung umzusetzenden Objekten hinterlegt sind, wobei jede Abgleichsinformation eine ein umzusetzendes Objekt geometrisch beschreibende Geometrieinformation und eine das jeweilige Objekt betreffende Zusatzinformation enthält; eine hardware- und/oder softwaremäßig implementierte Steuereinrichtung.

Die Steuereinrichtung kann, wie angedeutet, eingerichtet sein, zur Durchführung des Verfahrens gemäß dem ersten Aspekt der Erfindung und sonach insbesondere zum Erzeugen einer das wenigstens eine erfasste Objekt geometrisch beschreibenden Erfassungsinformation; zum Abgleichen der Erfassungsinformation mit in der Datenspeichereinrichtung hinterlegten Abgleichsinformationen zu im Rahmen eines Umsetzvorgangs vermittels einer Umsetzeinrichtung umzusetzenden Objekten, wobei jede Abgleichsinformation eine ein umzusetzendes Objekt geometrisch beschreibende Geometrieinformation und eine das jeweilige Objekt betreffende Zusatzinformation enthält; gegebenenfalls zum Erstellen einer eine Priorisierung des erfassten Objekts im Rahmen eines Umsetzvorgangs vermittels einer Umsetzeinrichtung beschreibenden Priorisierungsinformation basierend auf dem Ergebnis des Abgleichens; und zum Steuern eines Umsetzvorgangs des wenigstens einen erfassten Objekts vermittels der Umsetzeinrichtung.

Die Vorrichtung kann als eine Umsetz- und Bearbeitungsanlage ausgebildet sein oder eine solche umfassen. Die Vorrichtung kann daher einen Arbeitsbereich für eine Umsetzeinrichtung und einen Nicht-Arbeitsbereich für eine Tragstruktur umfassen.

Die Erfindung ist anhand von Ausführungsbeispielen in den Zeichnungsfiguren erläutert. Dabei zeigt:
Fig. 1 eine Prinzipdarstellung eines Ablaufdiagramms eines Verfahrens gemäß einem Ausführungsbeispiel;
Fig. 2 eine Prinzipdarstellung eines verfahrensgemäßen Abgleichens; und
Fig. 3 eine Vorrichtung gemäß einem Ausführungsbeispiel.

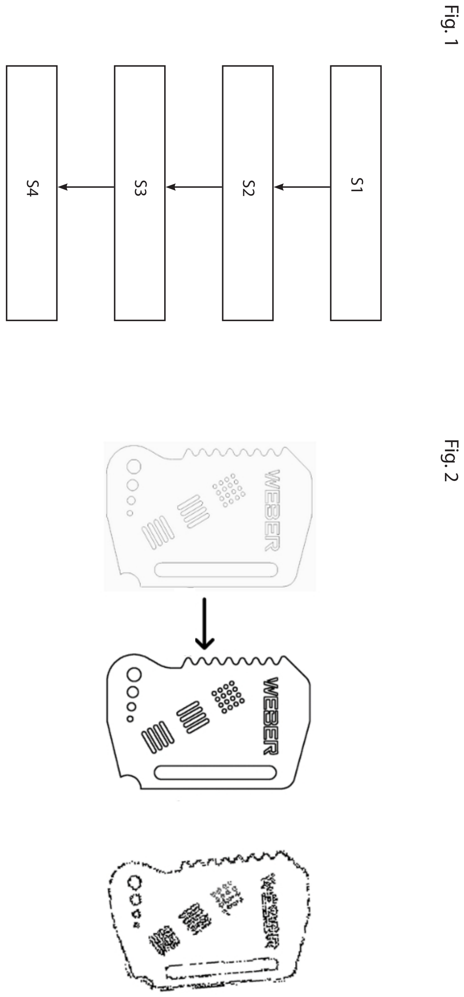

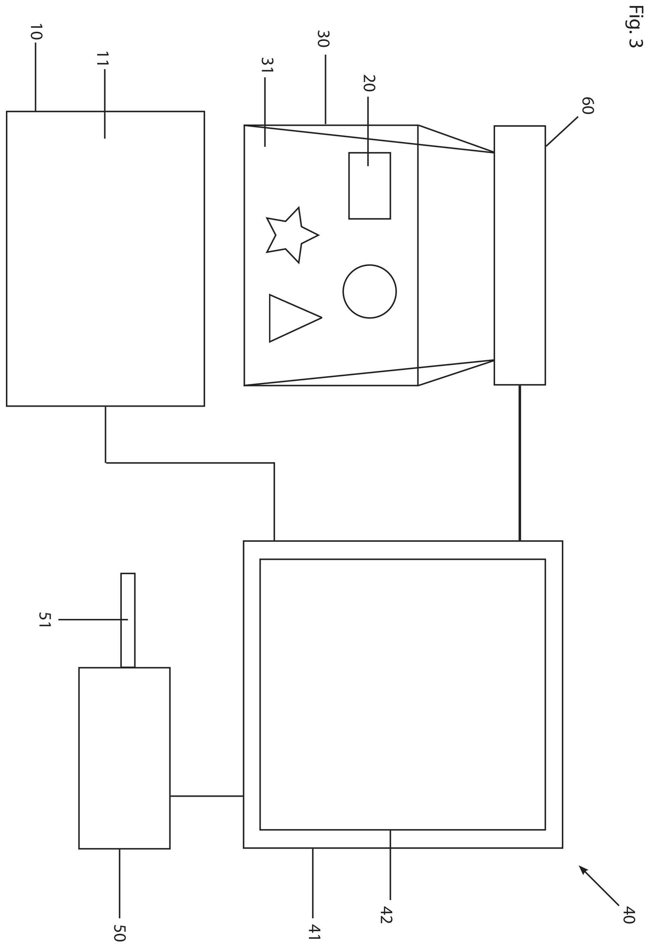

Fig. 1 zeigt eine Prinzipdarstellung eines Ablaufdiagramms eines Verfahrens zum Umsetzen wenigstens eines in einer Bearbeitungseinrichtung 10 zu bearbeitenden Objekts 20 von einer Tragstruktur 30 in die Bearbeitungseinrichtung 10 gemäß einem Ausführungsbeispiel. Das Verfahren dient sonach grundsätzlich zum Umsetzen wenigstens eines in einer Bearbeitungseinrichtung 10 zu bearbeitenden Objekts 20 von einer Tragstruktur 30 in die jeweilige Bearbeitungseinrichtung 10, in welcher eine Bearbeitung des wenigstens einen umgesetzten Objekts 20 erfolgen soll bzw. erfolgt. Ein Ausführungsbeispiel einer zur Durchführung des Verfahrens eingerichteten Vorrichtung 40 ist in Fig. 3 in einer Prinzipdarstellung gezeigt.

Bei einem verfahrensgemäß umzusetzenden bzw. umgesetzten Objekt 20 kann es sich im Allgemeinen um jedwedes Objekt handeln, welches in einer Bearbeitungseinrichtung 10 wenigstens einem Bearbeitungsschritt zu unterziehen ist. Im Besonderen kann es sich bei einem verfahrensgemäß umzusetzenden bzw. umgesetzten Objekt 20 um ein technisches Bauteil, wie z. B. um ein Werkstück, z. B. aus Metall, Kunststoff oder Holz, handeln, welches in einer Bearbeitungseinrichtung 10 wenigstens einem Bearbeitungsschritt zu unterziehen ist.

Bei einer Tragstruktur 30 kann es sich im Allgemeinen um jedwede tragende Struktur handeln, auf welcher ein oder mehrere in die Bearbeitungseinrichtung 10 umzusetzende Objekte 20 ableg- oder aufnehmbar sind. Die Tragstruktur 30 kann statisch ausgeführt sein, mithin keine Förderfunktion von auf ihr angeordneten bzw. abgelegten Objekten 20 entlang einer Förderstrecke aufweisen, oder dynamisch ausgeführt sein, mithin eine Förderfunktion von auf ihr angeordneten bzw. abgelegten Objekten 20 entlang einer Förderstrecke aufweisen. Konkrete, jedoch nicht einschränkende Beispiele für eine Tragstruktur 30 sind daher Paletten (Beispiel für eine statische Tragstruktur) oder Fördereinrichtungen (Beispiel for eine dynamische Tragstruktur), d. h. insbesondere Förderbänder, Förderketten, etc. Die Tragstruktur 30 kann wenigstens eine Ablege- und/oder Aufnahmefläche 31 aufweisen, auf welcher ein oder mehrere in die Bearbeitungseinrichtung 10 umzusetzende Objekte 20 ableg- oder aufnehmbar sind. Die Tragstruktur 30 kann in einem Nicht-Arbeitsbereich einer übergeordneten Vorrichtung 40, d. h. z. B. einer Umsetz- und Bearbeitungsanlage, angeordnet sein.

Bei einer Bearbeitungseinrichtung 10 kann es sich im Allgemeinen um jedwede Bearbeitungseinrichtung handeln, die eingerichtet ist, wenigstens ein in diese umgesetztes Objekt 20 wenigstens einem Bearbeitungsschritt zu unterziehen. Im Besonderen kann es sich bei einer Bearbeitungseinrichtung 20 um eine mechanische Bearbeitungseinrichtung handeln, die eingerichtet ist, wenigstens ein in diese umgesetztes Objekt 20 wenigstens einem mechanischen Bearbeitungsschritt zu unterziehen. Bei einem entsprechenden mechanischen Bearbeitungsschritt kann es sich z. B. um einen materialabtragenden Bearbeitungsschritt handeln. Ein entsprechender materialabtragender Bearbeitungsschritt kann z. B. ein Entgratschritt zum Entgraten eines Objekts 20 und/oder um ein Schleifschritt zum Schleifen eines Objekts 20 sein. Die Bearbeitungseinrichtung 10 kann daher konkret z. B. als Entgrat- und/oder Schleifeinrichtung, insbesondere als Metall- oder Holzschleifeinrichtung, ausgebildet sein oder eine solche umfassen. Die Bearbeitungseinrichtung 10 kann eine Ablege- und/oder Aufnahmefläche 11 aufweisen, auf welcher in dieser zu bearbeitende bzw. in dieser bearbeitete Objekte 20 ableg- oder aufnehmbar sind. Die Bearbeitungseinrichtung 10 kann in einem zu dem Nicht-Arbeitsbereich, in welchem die Tragstruktur 30 angeordnet ist, benachbarten Arbeitsbereich einer übergeordneten Vorrichtung 40, wie z. B. Umsetz- und Bearbeitungsanlage, angeordnet sein.

Zum Umsetzen wenigstens eines Objekts 20 von der Tragstruktur 30 in die Bearbeitungseinrichtung 10 wird verfahrensgemäß eine Umsetzeinrichtung 50 verwendet, welche eingerichtet ist, ein oder mehrere Objekte 10, insbesondere (voll)automatisierbar bzw. (voll)automatisch, von der Tragstruktur 30 in die Bearbeitungseinrichtung 10 umzusetzen. Das Umsetzen wenigstens eines Objekts 20 beinhaltet typischerweise zumindest ein Aufnehmen des wenigstens einen Objekts 20 vermittels wenigstens eines Umsetzelements 51 der Umsetzeinrichtung 50, z. B. durch ein zumindest abschnittsweise Greifen des wenigstens einen Objekts 20, ein Bewegen des vermittels des Umsetzelements 51 aufgenommenen wenigstens einen Objekts 20 von der Tragstruktur 30 in die Bearbeitungseinrichtung 10 und ein Ablegen des wenigstens einen Objekts 20 auf einer Ablege- und/oder Aufnahmefläche 31 der Bearbeitungseinrichtung 30.

Verfahrensgemäß kann eine Umsetzeinrichtung 50 verwendet werden, welche als eine, insbesondere boden- oder deckenseitig montierbare oder montierte, Handhabungseinrichtung ausgebildet ist oder wenigstens eine solche umfasst. Eine entsprechende Handhabungseinrichtung kann wiederum als mehrachsiger, d. h. insbesondere vier- oder sechsachsiger, Roboter bzw. Industrieroboter ausgebildet sein oder wenigstens einen solchen umfassen. Bei der bzw. einer verfahrensgemäß verwendeten Umsetzeinrichtung 50 kann es sich sonach um eine, insbesondere (voll)automatisierbar bzw. (voll)automatisiert, betreibbare Handhabungseinrichtung handeln, welche zur Handhabung von Werkstücken im Rahmen entsprechender Umsetzvorgänge, d. h. insbesondere entsprechender Beladevorgänge in die Bearbeitungseinrichtung 10 und/oder Entladevorgänge aus der Bearbeitungseinrichtung 10, eingerichtet ist. Eine entsprechende Umsetz- bzw. Handhabungseinrichtung umfasst sonach typischerweise wenigstens ein, gegebenenfalls auch als Endeffektor bezeichenbares, Umsetz- bzw. Handhabungselement 51, welches z. B. als Greifer- oder Saugerelement ausgebildet bzw. wenigstens ein solches umfassen kann.

Das Verfahren kann sonach insbesondere zum Beladen der Bearbeitungseinrichtung 10 mit entsprechenden in der Bearbeitungseinrichtung 10 zu bearbeitenden Objekten 20 vorgesehen sein. Grundsätzlich ist verfahrensgemäß auch ein Entladen der Bearbeitungseinrichtung 10 mit entsprechenden in dieser bearbeiteten Objekten 20 möglich; die nachfolgenden Schritte des Verfahrens zum Umsetzen wenigstens eines Objekts 20 in eine Bearbeitungseinrichtung (Beladen) gelten in entsprechender Weise für ein Entladen.

Das Verfahren umfasst die im Folgenden näher beschriebenen Schritte:
**In** einem ersten Schritt S1 des Verfahrens erfolgt ein Erfassen wenigstens eines auf der Tragstruktur 30 befindlichen Objekts 20 vermittels wenigstens einer Erfassungseinrichtung 60. Bei der Erfassungseinrichtung 60 kann es sich um eine optische Erfassungseinrichtung handeln. Eine entsprechende optische Erfassungseinrichtung kann z. B. als Kameraeinrichtung, insbesondere als 3D-Kameraeinrichtung, oder als Scannereinrichtung, insbesondere als 3D-Scannereirnichtung, d. h. im Allgemeinen als optische Sensoreinrichtung, ausgebildet sein oder wenigstens eine solche umfassen. Die Erfassungseinrichtung 60 kann sonach insbesondere eingerichtet sein, eine mehrdimensionale, d. h. insbesondere eine dreidimensionale, Abbildung des wenigstens einen erfassten Objekts 20 zu erzeugen. Aus den von der Erfassungseinrichtung 60 gelieferten Informationen - hierbei handelt es sich typischerweise um Bildinformationen - kann, z. B. in einer Steuereinrichtung 41 der Vorrichtung 40 z. B. vermittels z. B. computerimplementierten Bildverarbeitungstechniken, d. h. insbesondere vermittels einem oder mehreren Bildverarbeitungsalgorithmen, eine mehrdimensionale, d. h. insbesondere eine dreidimensionale, Bildinformation des wenigstens einen erfassten Objekts 20 erzeugt werden.

Es ist denkbar in dem ersten Schritt S1 des Verfahrens mehrere Erfassungseinrichtungen 60 gleicher oder unterschiedlicher Art einzusetzen bzw. zu verwenden, um das wenigstens eine auf der Tragstruktur 30 befindliche Objekt 20 zu erfassen. Sofern mehrere Erfassungseinrichtungen 60 eingesetzt bzw. verwendet werden, um das wenigstens eine auf der Tragstruktur 30 befindliche Objekt 20 zu erfassen, können diese in unterschiedlichen Anordnungen und/oder Ausrichtungen relativ zu der Tragstruktur 30 und damit relativ zu dem wenigstens einen Objekt 20 angeordnet und/oder ausgerichtet sein bzw. werden. Aus den von den Erfassungseinrichtungen 60 jeweilig gelieferten Informationen - hierbei handelt es sich typischerweise um Bildinformationen - kann eine mehrdimensionale, d. h. insbesondere eine dreidimensionale, Abbildung des wenigstens einen erfassten Objekts 20 erzeugt werden. Dies kann z. B. erfolgen, indem die von den jeweiligen Erfassungseinrichtungen 60 gelieferten Informationen z. B. in einer Steuereinrichtung 41 der Vorrichtung 40 z. B. vermittels computerimplementierten Bildverarbeitungstechniken, d. h. insbesondere vermittels einem oder mehreren Bildverarbeitungsalgorithmen, zu einer mehrdimensionalen, d. h. insbesondere dreidimensionalen, Bildinformation des wenigstens einen erfassten Objekts 20 zusammengesetzt werden.

Die Bildinformation des wenigstens einen erfassten Objekts 20 kann wiederum z. B. in einer Steuereinrichtung 41 der Vorrichtung 40 gegebenenfalls vermittels computerimplementierten Transformationstechniken, d. h. insbesondere vermittels einem oder mehreren Transformationsalgorithmen, in ein Format bzw. Datenformat transformiert werden, in welchem diese mit in einer Datenspeichereinrichtung 42 hinterlegten Abgleichsinformationen, insbesondere mit in diesen enthaltenen Geometrieinformationen, abgeglichen werden kann.

In einem auf den ersten Schritt S1 folgenden zweiten Schritt S2 des Verfahrens erfolgt ein Erzeugen einer das wenigstens eine erfasste Objekt 20 geometrisch beschreibenden Erfassungsinformation. Die von der oder den Erfassungseinrichtung(en) 60 gelieferten Informationen können in dem zweiten Schritt S2 des Verfahrens sonach z. B. in einer Steuereinrichtung 41 der Vorrichtung 40 z. B. vermittels computerimplementierten Bildverarbeitungstechniken, d. h. insbesondere vermittels einem oder mehreren Bildverarbeitungsalgorithmen, so aufbereitet bzw. verarbeitetet, dass wenigstens eine das wenigstens eine erfasste Objekt 20 geometrisch beschreibende Erfassungsinformation erzeugt wird. Die Erfassungsinformation kann ein oder mehrere geometrische Merkmale bzw. Parameter des wenigstens einen erfassten Objekts 20 beschreiben; ein entsprechendes geometrisches Merkmal bzw. ein entsprechende geometrischer Parameter des wenigstens einen erfassten Objekts 20 kann insbesondere wenigstens eine(r) der folgenden Merkmale bzw. Parameter des wenigstens einen erfassten Objekts 20 sein oder beschreiben: Länge, Breite, Höhe, Außenkontur, Innenkontur, Form, Fläche.

Auch die Erfassungsinformation des wenigstens einen erfassten Objekts 20 kann z. B. in einer Steuereinrichtung 41 der Vorrichtung 40 gegebenenfalls vermittels computerimplementierten Transformationstechniken, d. h. insbesondere vermittels einem oder mehreren Transformationsalgorithmen, in ein Format bzw. Datenformat transformiert werden, in welchem diese mit in einer Datenspeichereinrichtung 42 hinterlegten Abgleichsinformationen, insbesondere mit in diesen enthaltenen Geometrieinformationen, abgeglichen werden kann.

In einem auf den zweiten Schritt S2 folgenden dritten Schritt S3 des Verfahrens erfolgt ein Abgleichen der Erfassungsinformation mit in der erwähnten Datenspeichereinrichtung 42, diese kann einen Bestandteil der Steuereinrichtung 41 bilden oder mit dieser kommunizieren, hinterlegten Abgleichsinformationen zu im Rahmen eines Umsetzvorgangs vermittels der Umsetzeinrichtung 50 umzusetzenden Objekten. Jede Abgleichsinformation enthält eine ein umzusetzendes Objekt geometrisch beschreibende Geometrieinformation und wenigstens eine das jeweilige Objekt betreffende Zusatzinformation. Die in der Datenspeichereinrichtung 42 hinterlegten Abgleichsinformationen können mehrere, gegebenenfalls alle, im Rahmen eines oder mehrerer Umsetzvorgänge umzusetzende Objekte beinhalten, wobei jedes dieser Objekte in der jeweiligen Abgleichsinformation durch die jeweilige Zusatzinformation konkret definiert ist, insbesondere indem die Zusatzinformation dem jeweiligen Objekt wenigstens eine der folgenden Informationen fest zuweist: eine Art des Objekts, eine Artikelnummer des Objekts, eine die Bearbeitung des Objekts betreffende Auftragsnummer, eine die Bearbeitung des Objekts betreffende Kundennummer, einen oder mehrere die Bearbeitung des Objekts betreffende Bearbeitungsparameter, einen Ablageort des umzusetzenden Objekts, eine Ablageausrichtung des umzusetzenden Objekts.

Die wenigstens eine Zusatzinformation dient, wie sich im Weiteren ergibt, sonach insbesondere dazu, dem wenigstens eine erfassten Objekt 20 bei einem erfolgten Abgleich mit einer Abgleichsinformation eine Art des Objekts, eine Artikelnummer des Objekts, eine die Bearbeitung des Objekts betreffende Auftragsnummer, eine die Bearbeitung des Objekts betreffende Kundennummer, einen oder mehrere die Bearbeitung des Objekts betreffende Bearbeitungsparameter, einen Ablageort des umzusetzenden Objekts, eine Ablageausrichtung des umzusetzenden Objekts, etc., konkret zuzuordnen.

Der Abgleichvorgang erfolgt daher mit der Zielsetzung, das wenigstens eine in dem ersten Schritt S1 erfasste Objekt 20 mit Abgleichsinformationen abzugleichen und darauf basierend einem konkreten Objekt zuzuordnen, um zu ermitteln, um welches bzw. um was für ein Objekt es sich bei dem wenigstens einen erfassten Objekt 20 tatsächlich konkret handelt. Aus diesem Grund enthält jede Abgleichsinformation nicht nur eine ein umzusetzendes Objekt geometrisch beschreibende Geometrieinformation, welche für den Abgleich mit der Erfassungsinformation verwendet werden kann, sondern zusätzlich eine das jeweilige Objekt betreffende Zusatzinformation. Das Verfahren kann sonach im Rahmen des dritten Schritts S3 ein Zuordnen der Erfassungsinformation zu einer Geometrieinformation, welche ein zu dem wenigstens einen umzusetzenden Objekt geometrisch korrespondierendes Objekt beschreibt, beinhalten, um zu ermitteln, um welches bzw. um was für ein Objekt es sich bei dem wenigstens einen erfassten Objekt 20 tatsächlich konkret handelt.

Die Erfassungsinformation kann in dem dritten Schritt S3 des Verfahrens sonach z. B. vermittels computerimplementierten Abgleichtechniken, d. h. insbesondere vermittels einem oder mehreren Abgleichalgorithmen, mit in der Datenspeichereinrichtung 42 hinterlegten Abgleichsinformationen zu im Rahmen eines Umsetzvorgangs vermittels der Umsetzeinrichtung 50 umzusetzenden Objekten abgeglichen werden.

In einem auf den dritten Schritt S3 folgenden vierten Schritt S4 des Verfahrens erfolgt schließlich ein Durchführen eines Umsetzvorgangs des wenigstens einen erfassten Objekts 20 vermittels einer bzw. der Umsetzeinrichtung in die Bearbeitungseinrichtung 10. Der Umsetzvorgang erfolgt sonach verfahrensgemäß dann, wenn auf Grundlage des Abgleichvorgangs ermittelt wurde, um welches bzw. um was für ein Objekt es sich bei dem wenigstens einen erfassten Objekt 20 tatsächlich konkret handelt, was anhand des zuvor erfolgten Abgleichens der Erfassungsinformation mit in der Datenspeichereinrichtung hinterlegten Abgleichsinformationen zu im Rahmen eines Umsetzvorgangs vermittels der Umsetzeinrichtung 50 umzusetzenden Objekten möglich ist.

Insgesamt ermöglicht es das Verfahren auf einfache und praktische Weise, die umzusetzenden Objekte über einen entsprechenden Abgleich zu erkennen, sodass diese z. B. einem bestimmten Auftrag, Kunden, etc. zugeordnet werden können, was für die Gesamtabarbeitung einer entsprechenden Umsetzaufgabe, in welcher zahlreiche verschiedene Objekte, d. h. insbesondere auch Objekte, die unterschiedlichen Aufträgen, Kunden, etc. zugehörig sind, in eine Bearbeitungseinrichtung 10 umzusetzen sind, erhebliche Vorteile mit sich bringen kann, da verfahrensgemäß zu jedem umzusetzenden Objekt ermittelt werden kann bzw. ermittelt wird, um welches bzw. um was für ein Objekt es sich tatsächlich konkret handelt, was eine intelligente(re) Beladung der Bearbeitungseinrichtung 10 erlaubt.

Vor dem Schritt des Durchführens des Umsetzvorgangs des wenigstens einen erfassten Objekts 20 vermittels der Umsetzeinrichtung 50 kann ein Schritt des Erstellens einer eine Priorisierung des wenigstens einen erfassten Objekts 20 im Rahmen eines Umsetzvorgangs vermittels der Umsetzeinrichtung 50 beschreibenden Priorisierungsinformation basierend auf dem Ergebnis des Abgleichens erfolgen. Eine entsprechende Priorisierungsinformation kann z. B. einen Zeitpunkt, d. h. insbesondere einen Startzeitpunkt, der Umsetzung des erfassten Objekts im Rahmen eines Umsetzvorgangs mehrerer umzusetzender Objekte beschreiben. Das wenigstens eine erfasste Objekt 20 kann daher basierend auf dem Ergebnis des Abgleichens und damit basierend auf der Ermittlung, um welches bzw. um was für ein Objekt es sich bei dem wenigstens einen erfassten Objekt 20 tatsächlich konkret handelt, und damit, welchem Auftrag, Kunden, etc. das wenigstens eine erfasste Objekt 20 tatsächlich konkret zugehörig ist, mit einer Priorisierungsinformation versehen werden, welche Priorisierungsinformation bzw. welche damit verbundene Priorität bei dem im Weiteren erfolgenden Umsetzvorgang des wenigstens einen erfassten Objekts 20 berücksichtigt werden kann. Die Umsetzeinrichtung 50 bzw. deren Betrieb kann sonach auf Grundlage der Priorisierungsinformation gesteuert werden.

Anhand von Fig. 2 ist ersichtlich, dass die das wenigstens eine erfasste Objekt 20 geometrisch beschreibende Erfassungsinformation (in Fig. 2 beispielhaft ganz rechts dargestellt) eine punkt- oder linienförmige Abbildung des wenigstens einen erfassten Objekts 20 bzw. wenigstens eines Abschnitts des wenigstens einen erfassten Objekts 20 beschreiben bzw. aus der das wenigstens eine erfasste Objekt 20 geometrisch beschreibenden Erfassungsinformation eine punkt- oder linienförmige Abbildung bzw. Bildinformation, insbesondere eine Punktewolke, des wenigstens einen erfassten Objekts 20 erzeugt werden kann. Derart können sich Vorteile für den Abgleich der Erfassungsinformation mit entsprechenden Abgleichsinformationen, d. h. insbesondere entsprechenden Geometrieinformationen, ergeben, denn auch diese können eine punkt- oder linienförmige Abbildung bzw. Bildinformation des jeweiligen Objekts bzw. eines Abschnitts des jeweiligen Objekts beschreiben. Die Erfassungsinformation kann sonach im Allgemein z. B. vermittels der Steuereinrichtung 41 computerimplementiert, d. h. insbesondere über ein oder mehrere Bildverarbeitungsalgorithmen, so aufbereitet bzw. verarbeitet werden, dass sie in einer Form bzw. einem Format bzw. Datenformat vorliegt, welche ein einfaches Abgleichen mit einer entsprechenden Abgleichsinformation bzw. Geometrieinformation ermöglicht. Derart kann in überraschender Weise erheblich Rechen- und/oder Speicherkapazität gespart und das Verfahren insgesamt, insbesondere im Hinblick auf die erforderlichen Rechen- und/oder Speicherressourcen, effizienter gestaltet werden.

Das Aufbereiten bzw. Verarbeiten der jeweiligen Erfassungsinformation kann ein Transformieren einer dreidimensionalen Bildinformation des wenigstens einen erfassten Objekts in eine zweidimensionale Bildinformation des wenigstens einen erfassten Objekts beinhalten, insbesondere wenn auch die Geometrieinformation das jeweilige Objekt als zweidimensionale Bildinformation beschreibt, oder umgekehrt.

Anhand von Fig. 2 ist ferner ersichtlich, dass die in einer jeweiligen Abgleichsinformation enthaltene Geometrieinformation (in Fig. 2 in der Mitte dargestellt) durch Datenverarbeitung, insbesondere Datentransformation, aus einer in Fig. 2 ganz links dargestellten CAD- oder DXF-Datei erzeugt werden kann. Bei den Geometrieinformationen kann es sich sonach jeweils um eine durch Datenverarbeitung, insbesondere Datentransformation, aus einer CAD- oder DXF-Datei erzeugte bzw. abgeleitete Information handeln. Insbesondere kann es sich bei den Geometrieinformationen sonach jeweils um eine durch Datenverarbeitung, insbesondere Datentransformation, aus einer CAD- oder DXF-Datei erzeugte bzw. abgeleitete Bildinformation in Form einer punkt- oder linienförmigen Abbildung bzw. Bildinformation, insbesondere einer Punktewolke, des jeweiligen Objekts handeln. Eine entsprechende einer punkt- oder linienförmigen Abbildung bzw. Bildinformation des jeweiligen Objekts kann das jeweilige Objekt insbesondere im Bereich seiner Außenkontur und/oder Oberseite beschreiben.

Das Abgleichen kann grundsätzlich einen Abgleich eines oder mehrerer der in der Erfassungsinformation beschriebenen oder aus dieser ableitbaren geometrischen Merkmale bzw. Parameter des wenigstens einen erfassten Objekts 20 mit einem oder mehreren hierzu korrespondierenden in der bzw. einer jeweiligen Geometrieinformation beschriebenen oder aus dieser ableitbaren geometrischen Merkmalen bzw. Parameter beinhalten. Das Abgleichen bzw. ein entsprechender Abgleichvorgang kann sonach eine Ermittlung von Ähnlichkeiten bzw. Übereinstimmungen zwischen einem oder mehreren in einer entsprechenden Erfassungsinformation beschriebenen geometrischen Merkmalen bzw. Parametern des wenigstens einen erfassten Objekts 20 mit in einer entsprechenden Abgleichsinformation bzw. Geometrieinformation beschriebenen geometrischen Merkmalen bzw. Parametern eines jeweiligen Objekts beinhalten. Dabei kann es vorgesehen sein, dass eine Übereinstimmung zwischen einem erfassten Objekt 20 und einem entsprechenden Objekt gegeben ist, wenn ein oder mehrere bestimmte geometrische Merkmale bzw. Parameter zumindest zu einem bestimmten Grad übereinstimmen. Dabei können Grenzwerte implementiert werden, welche z. B. definieren, dass eine Übereinstimmung zwischen einem erfassten Objekt und einem entsprechenden Objekt gegeben ist, wenn mehr als 50%, insbesondere mehr als 60%, weiter insbesondere mehr als 70%, weiter insbesondere mehr als 80%, weiter insbesondere mehr als 90%, eines oder mehrerer geometrischer Merkmale bzw. Parameter des wenigstens einen erfassten Objekts 20 mit dem entsprechenden Objekt vorliegt.

Die Zusatzinformation kann, wie weiter oben bereits angedeutet, wenigstens eine der folgenden Informationen des jeweiligen Objekts umfassten eine Art, eine Artikelnummer, eine, insbesondere die Bearbeitung des Objekts betreffende, Auftragsnummer, eine, insbesondere die Bearbeitung des Objekts betreffende, Kundennummer, einen oder mehrere die Bearbeitung des Objekts betreffende Bearbeitungsparameter, einen Ablageort des umzusetzenden Objekts, insbesondere auf der Ablege- und/oder Aufnahmefläche 31 der Tragstruktur 30 und/oder der Ablege- und/oder Aufnahmefläche 11 der Bearbeitungseinrichtung 10, eine Ablageausrichtung des umzusetzenden Objekts, insbesondere auf der Ablege- und/oder Aufnahmefläche 31 der Tragstruktur 30 und/oder der Ablege- und/oder Aufnahmefläche 11 der Bearbeitungseinrichtung 10. Mithin ist es durch das beschriebene Abgleichen der Erfassungsinformation mit in der Datenspeichereinrichtung 42 hinterlegten Abgleichsinformationen zu im Rahmen eines Umsetzvorgangs vermittels der Umsetzeinrichtung 50 umzusetzenden Objekten, wobei jede Abgleichsinformation eine ein umzusetzendes Objekt geometrisch beschreibende Geometrieinformation und eine das jeweilige Objekt betreffende Zusatzinformation enthält, und das daraufhin mögliche Zuordnen des wenigstens einen erfassten Objekts 20 zu einem konkreten im Rahmen eines Umsetzvorgangs umzusetzenden Objekt möglich, dem wenigstens einen erfassten Objekt 20 bereits vor dem eigentlichen Umsetzvorgang eine Art, eine Artikelnummer, eine, insbesondere die Bearbeitung des Objekts betreffende, Auftragsnummer, eine, insbesondere die Bearbeitung des Objekts betreffende, Kundennummer, einen oder mehrere die Bearbeitung des Objekts betreffende Bearbeitungsparameter, einen Ablageort des umzusetzenden Objekts, insbesondere auf der Ablege- und/oder Aufnahmefläche 31 der Tragstruktur 30 und/oder der Ablege- und/oder Aufnahmefläche 11 der Bearbeitungseinrichtung 11, eine Ablageausrichtung des umzusetzenden Objekts, insbesondere auf der Ablege- und/oder Aufnahmefläche 31 der Tragstruktur 30 und/oder der Ablege- und/oder Aufnahmefläche 11 der Bearbeitungseinrichtung 10 zuzuordnen.

Sämtliche der vorstehend erwähnten, verfahrensgemäß einsetzbaren bzw. verwendbaren Algorithmen können in der hardware- und/oder softwaremäßig implementierten Steuereinrichtung 41 der Vorrichtung 40 implementiert sein.

Die Vorrichtung 40 umfasst, wie anhand der Prinzipdarstellung gemäß Fig. 3 ersichtlich ist, insbesondere die folgenden Bestandteile bzw. Komponenten: eine Tragstruktur 30, eine Umsetzeinrichtung 50, eine Erfassungseinrichtung 60 zum Erfassen wenigstens eines auf der Tragstruktur 30 befindlichen Objekts 20, eine Datenspeichereinrichtung 42, in welcher Abgleichsinformationen zu im Rahmen eines Umsetzvorgangs vermittels der Umsetzeinrichtung 50 umzusetzenden Objekten 20 hinterlegt sind, wobei jede Abgleichsinformation eine ein umzusetzendes Objekt geometrisch beschreibende Geometrieinformation und eine das jeweilige Objekt betreffende Zusatzinformation enthält; eine hardware- und/oder softwaremäßig implementierte Steuereinrichtung 41.

Die Steuereinrichtung 41 kann, wie angedeutet, eingerichtet sein, zur Durchführung des Verfahrens und sonach insbesondere zum Erzeugen einer das wenigstens eine erfasste Objekt 20 geometrisch beschreibenden Erfassungsinformation; zum Abgleichen der Erfassungsinformation mit in der Datenspeichereinrichtung 42 hinterlegten Abgleichsinformationen zu im Rahmen eines Umsetzvorgangs vermittels der Umsetzeinrichtung 50 umzusetzenden Objekten 20, wobei jede Abgleichsinformation eine ein umzusetzendes Objekt geometrisch beschreibende Geometrieinformation und eine das jeweilige Objekt betreffende Zusatzinformation enthält; gegebenenfalls zum Erstellen einer eine Priorisierung des erfassten Objekts im Rahmen eines Umsetzvorgangs vermittels einer Umsetzeinrichtung beschreibenden Priorisierungsinformation basierend auf dem Ergebnis des Abgleichens; und zum Steuern eines Umsetzvorgangs des wenigstens einen erfassten Objekts vermittels der Umsetzeinrichtung.

Die Vorrichtung 40 kann als eine Umsetz- und Bearbeitungsanlage ausgebildet sein oder eine solche umfassen.

## Patentansprüche

1. Verfahren zum Umsetzen wenigstens eines in einer Bearbeitungseinrichtung zu bearbeitenden Objekts, insbesondere eines Werkstücks, von einer Tragstruktur in eine Bearbeitungseinrichtung, umfassend die folgenden Schritte:
- Erfassen wenigstens eines auf der Tragstruktur befindlichen Objekts vermittels einer Erfassungseinrichtung;
- Erzeugen einer das wenigstens eine erfasste Objekt geometrisch beschreibenden Erfassungsinformation;
- Abgleichen der Erfassungsinformation mit in einer Datenspeichereinrichtung hinterlegten Abgleichsinformationen zu im Rahmen eines Umsetzvorgangs vermittels einer Umsetzeinrichtung umzusetzenden Objekten, wobei jede Abgleichsinformation eine ein umzusetzendes Objekt geometrisch beschreibende Geometrieinformation und eine das jeweilige Objekt betreffende Zusatzinformation enthält; und
- Durchführen eines Umsetzvorgangs des wenigstens einen erfassten Objekts vermittels einer Umsetzeinrichtung in die Bearbeitungseinrichtung.

2. Verfahren nach Anspruch 1, wobei der Umsetzvorgang dann erfolgt, wenn auf Grundlage des Abgleichvorgangs ermittelt wurde, um welches bzw. um was für ein Objekt es sich bei dem wenigstens einen erfassten Objekt tatsächlich konkret handelt, was anhand des zuvor erfolgten Abgleichens der Erfassungsinformation mit in der Datenspeichereinrichtung, hinterlegten Abgleichsinformationen zu im Rahmen eines Umsetzvorgangs vermittels einer Umsetzeinrichtung umzusetzenden Objekten möglich ist.

3. Verfahren nach Anspruch 1 oder 2, wobei vor dem Durchführen eines Umsetzvorgangs des wenigstens einen erfassten Objekts vermittels einer Umsetzeinrichtung, ein Erstellen einer eine Priorisierung des erfassten Objekts im Rahmen eines Umsetzvorgangs vermittels einer Umsetzeinrichtung beschreibenden Priorisierungsinformation basierend auf dem Ergebnis des Abgleichens erfolgt, wobei die Umsetzeinrichtung auf Grundlage der Priorisierungsinformation gesteuert wird.

4. Verfahren nach einem der vorhergehenden Ansprüche, wobei die das wenigstens eine erfasste Objekt geometrisch beschreibende Erfassungsinformation eine punkt- oder linienförmige Abbildung des erfassten Objekts beschreibt oder, wobei aus der das wenigstens eine erfasste Objekt geometrisch beschreibende Erfassungsinformation eine punkt- oder linienförmige Abbildung, insbesondere eine Punktewolke, des erfassten Objekts erzeugt wird.

5. Verfahren nach einem der vorhergehenden Ansprüche, wobei eine ein umzusetzendes Objekt geometrisch beschreibende Geometrieinformation eine punkt- oder linienförmige Abbildung, insbesondere eine Punktewolke, des erfassten Objekts beschreibt.

6. Verfahren nach einem der vorhergehenden Ansprüche, wobei die Geometrieinformation durch Datenverarbeitung, insbesondere Datentransformation, aus einer CAD- oder DXF-Datei erzeugt wird.

7. Verfahren nach einem der vorhergehenden Ansprüche, wobei das Abgleichen einen Abgleich eines oder mehrerer der in der Erfassungsinformation beschriebenen oder aus dieser ableitbaren geometrischen Merkmale des erfassten Objekts mit einem oder mehreren hierzu korrespondierenden in der Geometrieinformation beschriebenen oder aus dieser ableitbaren geometrischen Merkmalen beinhaltet.

8. Verfahren nach einem der vorhergehenden Ansprüche, wobei die Zusatzinformation wenigstens eine der folgenden Informationen des jeweiligen Objekts umfasst: eine Art, eine Artikelnummer, eine die Bearbeitung des Objekts betreffende Auftragsnummer, eine die Bearbeitung des Objekts betreffende Kundennummer, einen oder mehrere die Bearbeitung des Objekts betreffende Bearbeitungsparameter, einen Ablageort des umzusetzenden Objekts, eine Ablageausrichtung des umzusetzenden Objekts.

9. Verfahren nach einem der vorhergehenden Ansprüche, wobei die Priorisierungsinformation einen Zeitpunkt der Umsetzung des erfassten Objekts im Rahmen eines Umsetzvorgangs mehrerer umzusetzender Objekte beschreibt.

10. Verfahren nach einem der vorhergehenden Ansprüche, wobei die Tragstruktur eine Fördereinrichtung ist oder eine solche umfasst.

11. Verfahren nach einem der vorhergehenden Ansprüche, wobei die Bearbeitungseinrichtung eine mechanische Bearbeitungseinrichtung, insbesondere eine Schleifbearbeitungseinrichtung, ist.

12. Verfahren nach einem der vorhergehenden Ansprüche, wobei die Erfassungseinrichtung eine optische Erfassungseinrichtung, insbesondere eine Kamera, weiter insbesondere eine 3D-Kamera, ist oder eine solche umfasst.

13. Vorrichtung zum Umsetzen wenigstens eines in einer Bearbeitungseinrichtung zu bearbeitenden Objekts, insbesondere eines Werkstücks, von einer Tragstruktur in eine Bearbeitungseinrichtung, umfassend:
- eine Umsetzeinrichtung;
- wenigstens eine Erfassungseinrichtung zum Erfassen wenigstens eines auf der Tragstruktur befindlichen Objekts;
- eine Datenspeichereinrichtung, in welcher Abgleichsinformationen zu im Rahmen eines Umsetzvorgangs vermittels einer Umsetzeinrichtung umzusetzenden Objekten hinterlegt sind, wobei jede Abgleichsinformation eine ein umzusetzendes Objekt geometrisch beschreibende Geometrieinformation und eine das jeweilige Objekt betreffende Zusatzinformation enthält;
- eine Steuereinrichtung, welche eingerichtet ist, zum
- - Erzeugen einer das wenigstens eine erfasste Objekt geometrisch beschreibenden Erfassungsinformation;
- - Abgleichen der Erfassungsinformation mit in der Datenspeichereinrichtung hinterlegten Abgleichsinformationen zu im Rahmen eines Umsetzvorgangs vermittels einer Umsetzeinrichtung umzusetzenden Objekten, wobei jede Abgleichsinformation eine ein umzusetzendes Objekt geometrisch beschreibende Geometrieinformation und eine das jeweilige Objekt betreffende Zusatzinformation enthält; und
- Steuern eines Umsetzvorgangs des wenigstens einen erfassten Objekts vermittels der Umsetzeinrichtung.
